(19) Europäisches Patentamt
European Patent Office
Office européen des brevets

(11) **EP 4 718 482 A1**

(12) **EUROPEAN PATENT APPLICATION**
published in accordance with Art. 153(4) EPC

(43) Date of publication:
**01.04.2026 Bulletin 2026/14**

(21) Application number: **24810695.7**

(22) Date of filing: **21.03.2024**

(51) International Patent Classification (IPC):
**H01F 27/25** (2006.01)   **H01F 1/16** (2006.01)
**H01F 1/153** (2006.01)   **H01F 27/36** (2006.01)
**H01F 38/14** (2006.01)

(52) Cooperative Patent Classification (CPC):
**H01F 1/153; H01F 1/16; H01F 27/25; H01F 27/36; H01F 38/14**

(86) International application number:
**PCT/JP2024/011055**

(87) International publication number:
**WO 2024/241687 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.05.2023 JP 2023084394**

(71) Applicant: **Proterial, Ltd.**
**Tokyo 135-0061 (JP)**

(72) Inventors:
• **KURIYAMA, Yasuo**
  **Tokyo 135-0061 (JP)**
• **MIYANO, Kouhei**
  **Tokyo 135-0061 (JP)**
• **OGAWA, Yuichi**
  **Tokyo 135-0061 (JP)**

(74) Representative: **Meissner Bolte Partnerschaft mbB**
**Patentanwälte Rechtsanwälte**
**Postfach 86 06 24**
**81633 München (DE)**

(54) **SHEET-SHAPED MAGNETIC MEMBER**

(57)    A sheet-shaped magnetic member includes a plurality of nano-crystal alloy ribbons each of which is formed in a band shape having a short side and a long side, the plurality of nano-crystal alloy ribbons being arranged in an in-plane direction and stacked in a thickness direction. The sheet-shaped magnetic member has a rectangular shape having a longitudinal direction and a transverse direction when viewed from the thickness direction. In a central portion of the sheet-shaped magnetic member in the transverse direction, a direction of the long side is the longitudinal direction. In both outer portions of the sheet-shaped magnetic member located on both outer sides with respect to the central portion in the transverse direction, the direction of the long side is the transverse direction.

FIG. 1

EP 4 718 482 A1

**Description**

CROSS-REFERENCE TO RELATED APPLICATION

The present international application claims priority based on Japanese Patent Application No. 2023-084394 filed to Japanese Patent Office on May 23, 2023, and the entire content of Japanese Patent Application No. 2023-084394 is incorporated by reference in its entirety.

TECHNICAL FIELD

The present disclosure relates to a sheet-shaped magnetic member.

BACKGROUND ART

A non-contact charging method is widely used as a charging method. The non-contact charging method has begun to spread in the field of electronic apparatuses such as tablet type information terminals, music players, smartphones, and mobile phones, for example. In addition, the non-contact charging method is a technology applicable to electronic apparatuses other than the above, electric vehicles, drones, and the like. The non-contact charging method is also a technology applicable to transport vehicles such as a forklift and an automated guided vehicle (AGV), a railroad, a tram, and the like.

In the non-contact charging method, a non-contact charging apparatus is used. The non-contact charging apparatus includes a sheet-shaped magnetic member. The sheet-shaped magnetic member is used for an inductor, a magnetic shield, and the like. Patent Document 1 describes a method for manufacturing a sheet-shaped magnetic member. In the manufacturing method described in Patent Document 1, a thin sheet-shaped magnetic body is bonded onto a sheet substrate with an adhesive layer interposed therebetween to form a sheet-shaped magnetic member. Next, the thin sheet-shaped magnetic body is divided into a plurality of pieces by an external force while maintaining a state in which the thin sheet-shaped magnetic body is bonded to the sheet substrate.

In addition, a combination of an amorphous alloy ribbon and a nano-crystal alloy ribbon is known. The combination of the amorphous alloy ribbon and the nano-crystal alloy ribbon is disclosed in, for example, Patent Document 2. Patent Document 2 discloses stacking nano-crystal ribbons. Specifically, it is disclosed that the nano-crystal ribbons are arranged one by one in the horizontal direction and stacked in the vertical direction. By arranging the nano-crystal ribbons in the horizontal direction, a wide member can be obtained. It is disclosed that when the nano-crystal ribbons are stacked, the longitudinal directions of the nano-crystal ribbons are made different from each other. It is disclosed that stacking in this manner has an effect of enhancing structural rigidity.

PRIOR ART DOCUMENTS

PATENT DOCUMENTS

Patent Document 1: Japanese Unexamined Patent Application Publication No. 2008-112830
Patent Document 2: Published Japanese Translation No. 2019-522355 of the PCT International Publication

SUMMARY OF THE INVENTION

PROBLEMS TO BE SOLVED BY THE INVENTION

A non-contact charging apparatus capable of charging a traveling mobile body has been studied. A sheet-shaped magnetic member suitable for this charging apparatus is not known. In one aspect of the present disclosure, it is preferable to provide a sheet-shaped magnetic member suitable for the non-contact charging apparatus capable of charging a traveling mobile body.

MEANS FOR SOLVING THE PROBLEMS

One aspect of the present disclosure is a sheet-shaped magnetic member including a plurality of nano-crystal alloy ribbons each of which is formed in a band shape having a short side and a long side, the plurality of nano-crystal alloy ribbons being arranged in an in-plane direction and stacked in a thickness direction. The sheet-shaped magnetic member has a rectangular shape having a longitudinal direction and a transverse direction when viewed from the thickness direction. In a central portion of the sheet-shaped magnetic member in the transverse direction, a direction of the long side is the longitudinal direction. In both outer portions of the sheet-shaped magnetic member located on both outer sides with respect to the central portion in the transverse direction, the direction of the long side is the transverse direction.

The sheet-shaped magnetic member according to one aspect of the present disclosure is suitable for a non-contact charging apparatus capable of charging a mobile body that is traveling.

BRIEF DESCRIPTION OF THE DRAWINGS

FIG. 1 is a plan view illustrating a configuration of a sheet-shaped magnetic member in the present disclosure.
FIG. 2 is a plan view illustrating a configuration of a nano-crystal alloy ribbon in the present disclosure.
FIG. 3 is a plan view illustrating a configuration of a sheet-shaped magnetic member in another form in the present disclosure.
FIG. 4 is a cross-sectional view illustrating a magnetic sheet material in the present disclosure.
FIG. 5 is a cross-sectional view illustrating a stacking structure of the nano-crystal alloy ribbons in the present disclosure.
FIG. 6 is a plan view illustrating an example of a coil in the present disclosure.
FIG. 7 is a cross-sectional view illustrating a structure of a stacked substrate in the present disclosure.
FIG. 8 is a plan view illustrating a configuration of a stacked unit in the present disclosure.
FIG. 9 is a plan view illustrating a configuration of the stacked unit in the present disclosure.
FIG. 10 is a plan view illustrating a configuration of the sheet-shaped magnetic member in a state of being disassembled into the stacked units.
FIG. 11 is a plan view illustrating a configuration of the sheet-shaped magnetic member in the other form in a state of being disassembled into stacked units.
FIG. 12 is a cross-sectional view illustrating a configuration of a unit layer.

EXPLANATION OF REFERENCE NUMERALS

1...nano-crystal alloy ribbon, 1a...long side, 1b...short side, 3...inclined joint portion, 5...resin sheet, 6 coil, 10...adhesive layer, 10X...first adhesive layer end, 10Y...second adhesive layer end, 11...support, 11A...first surface, 11B second surface, 12...adhesive, 15...resin sheet, 20X...first ribbon end, 20Y...second ribbon end, 21...crack, 22...small piece, 31...corner portion, 35...base material, 37...unit layer, 41A, 41B, 43A, 43B, 43C, 43D...stacked unit, 100...magnetic sheet material, 110, 111...sheet-shaped magnetic member, 300...stacked substrate, M1...central portion, M2... both outer portions, a, b... gap

MODE FOR CARRYING OUT THE INVENTION

Exemplary embodiments of the present disclosure will be described with reference to the drawings.

1. Sheet-shaped magnetic member

A sheet-shaped magnetic member is used, for example, in a non-contact charging apparatus. The sheet-shaped magnetic member may be used in a power feeding device of a non-contact charging apparatus or may be used in a power receiving device of the non-contact charging apparatus. The sheet-shaped magnetic member is particularly preferably used in the power receiving device.

The non-contact charging apparatus is used for, for example, an apparatus that consumes more power than an information processing apparatus such as a smartphone or an electronic apparatus. The non-contact charging apparatus is used, for example, in a mobile body such as an automobile. In this case, the sheet-shaped magnetic member included in the non-contact charging apparatus is a sheet-shaped magnetic member for non-contact charging during traveling of the mobile body. In a case where the non-contact charging apparatus is used for a mobile body, the mobile body can be charged while traveling. The sheet-shaped magnetic member is preferably mounted on a mobile body such as an automobile. The sheet-shaped magnetic member is suitable for a non-contact charging apparatus capable of charging a traveling mobile body for following reasons.

In the case of non-contact charging during traveling, coils on a primary side (that is, a power distribution side) are arranged along a traveling route. For example, the coils on the primary side are arranged on a traveling path or buried in the traveling path. On the other hand, a coil on a secondary side (that is, a power receiving side) is attached to the mobile body and moves on the traveling route. The sheet-shaped magnetic member is disposed, for example, close to the coil on the secondary side. The sheet-shaped magnetic member has, for example, a rectangular shape. By setting an orientation of the sheet-shaped magnetic member such that a longitudinal direction of the sheet-shaped magnetic member is a traveling direction, it is possible to increase an area where the sheet-shaped magnetic member and the coil on the primary side face each other. As a result, a power reception efficiency is improved.

In addition, a plurality of coils on the secondary side can be arranged in the traveling direction. The sheet-shaped magnetic member has, for example, a rectangular shape. In this case, the sheet-shaped magnetic member can correspond to the plurality of secondary-side coils on the secondary side.

The sheet-shaped magnetic member can be disposed close to the coil on the secondary side. In this case, a magnetic path direction generated by the coil on the secondary side can be matched with an anisotropic direction of the sheet-shaped magnetic member. In this case, the power reception efficiency is improved.

Note that the non-contact charging apparatus may be used for an information processing apparatus, an electronic apparatus, and the like. In addition, the non-contact charging apparatus may be used for transport vehicles such as a forklift and an AGV, a railroad, a tram, and the like.

2. Sheet-shaped magnetic member 110

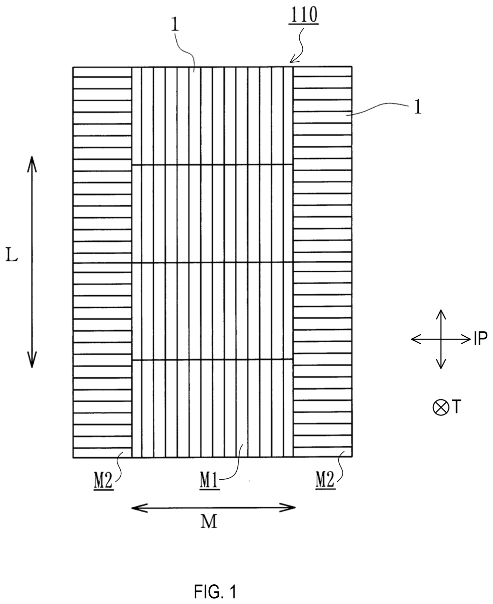

FIG. 1 is a plan view illustrating a configuration of a sheet-shaped magnetic member 110. The sheet-shaped magnetic member 110 is an embodiment of the sheet-shaped magnetic member of the present disclosure. The sheet-shaped magnetic member 110 is a sheet-shaped member. Directions parallel to the main surface of the sheet-shaped magnetic member 110 is defined as an in-plane direction IP. A direction orthogonal to the main surface of the sheet-shaped magnetic member 110 is defined as a thickness direction T.

The sheet-shaped magnetic member 110 includes a plurality of nano-crystal alloy ribbons 1 that are arranged in the in-plane direction IP and stacked in the thickness direction T. One layer is formed by arranging the nano-crystal alloy ribbons 1 in the in-plane direction IP. In the sheet-shaped magnetic member 110, a plurality of layers are stacked in the thickness direction T.

FIG. 1 illustrates an arrangement of the nano-crystal alloy ribbons 1 in one of the plurality of stacked layers. The shape of the sheet-shaped magnetic member 110 is a rectangular shape in plan view, and has a longitudinal direction L and a transverse direction (or short direction) M. The plan view is viewed from the thickness direction T. Each of the longitudinal direction L and the transverse direction M is part of the in-plane direction IP. The shape of the layer formed by arranging the nano-crystal alloy ribbons 1 in the in-plane direction IP is a rectangular shape having the longitudinal direction L and the transverse direction M. The rectangular shape is a rectangle or a shape similar thereto.

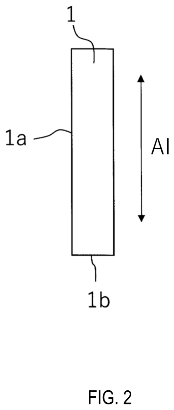

FIG. 2 is a plan view of the nano-crystal alloy ribbon 1. The nano-crystal alloy ribbon 1 has a band shape having two long sides 1a and two short sides 1b. In the nano-crystal alloy ribbon 1, length of the long side 1a and length of the short side 1b are appropriately set.

As illustrated in FIG. 1, a central portion M1 is part of the sheet-shaped magnetic member 110. The central portion M1 is a portion located at the center of the sheet-shaped magnetic member 110 in the transverse direction M. In the central portion M1, the plurality of nano-crystal alloy ribbons 1 are arranged such that the direction of the long side 1a is in the longitudinal direction L. In addition, in the central portion M1, the four nano-crystal alloy ribbons 1 are arranged in the longitudinal direction L.

In the central portion M1, the number of nano-crystal alloy ribbons 1 arranged in the transverse direction M is determined by the length of the sheet-shaped magnetic member 110 in the transverse direction M and the length of the short side 1b. The length of the sheet-shaped magnetic member 110 in the transverse direction M can be determined according to characteristics of the sheet-shaped magnetic member 110.

In addition, the number of nano-crystal alloy ribbons 1 arranged in the longitudinal direction L in the central portion M1 is determined by the length of the sheet-shaped magnetic member 110 in the longitudinal direction L and the length of the long side 1a. The length of the sheet-shaped magnetic member 110 in the longitudinal direction L can be determined according to the characteristics of the sheet-shaped magnetic member 110. The number of nano-crystal alloy ribbons 1 arranged in the longitudinal direction L may be one.

Both outer portions M2 are part of the sheet-shaped magnetic member 110. Both the outer portions M2 are portions located on both outer sides with respect to the central portion M1 in the transverse direction M. In both the outer portions M2, the plurality of nano-crystal alloy ribbons 1 are arranged such that the direction of the long side 1a is in the transverse direction M. In both the outer portions M2, the long sides 1a of the two adjacent nano-crystal alloy ribbons 1 face each other.

In both the outer portions M2, the number of nano-crystal alloy ribbons 1 arranged in the longitudinal direction L is determined by the length of the sheet-shaped magnetic member 110 in the longitudinal direction L and the length of the short side 1b. The length of the sheet-shaped magnetic member 110 in the longitudinal direction L can be determined according to the characteristics of the sheet-shaped magnetic member 110. In the form illustrated in FIG. 1, the number of nano-crystal alloy ribbons 1 arranged in the transverse direction M at each of both the outer portions M2 is one, but may be two or more.

An interval between the two nano-crystal alloy ribbons 1 adjacent to each other in the in-plane direction IP is preferably 5 mm or less, more preferably 3 mm or less, and particularly preferably 2 mm or less. The interval between the two nano-crystal alloy ribbons 1 is an interval between the long sides 1a or an interval between the short sides 1b. The interval is most preferably 0 mm.

When the two nano-crystal alloy ribbons 1 adjacent to each other in the in-plane direction IP are viewed from the thickness direction T, part of one of the nano-crystal alloy ribbons 1 may overlap the other nano-crystal alloy ribbon 1. In this case, the interval between the two nano-crystal alloy ribbons 1 adjacent to each other in the in-plane direction IP can be made 0 mm. That is, the two nano-crystal alloy ribbons 1 are not spaced from each other. In addition, in the in-plane direction IP, the two nano-crystal alloy ribbons 1 are continuous.

In the sheet-shaped magnetic member 110, the number of layers of the nano-crystal alloy ribbons 1 stacked in the thickness direction T is defined as the number of stacked layers. The number of stacked layers is determined by the characteristics of the sheet-shaped magnetic member 110 to be produced. The number of stacked layers is, for example, 50 or more, preferably 100 or more. The upper limit of the number of stacked layers does not need to be particularly limited, but is, for example, 300 or less. The number of stacked layers is preferably 250 or less. The number of stacked layers in both the outer portions M2 may be the same as or different from the number of stacked layers in the central portion M1.

Attention is paid to the position of the long side 1a in each of the plurality of nano-crystal alloy ribbons 1 stacked in the thickness direction T. At least some of the long sides 1a are preferably different in position in the direction of the short side 1b as compared with the long sides 1a of the nano-crystal alloy ribbons 1 adjacent in the thickness direction T. In this case, it is possible to prevent the positions of all the long sides 1a of the plurality of stacked nano-crystal alloy ribbons 1 from matching when viewed from the thickness direction T, which is preferable.

Note that the direction of the short side 1b is a direction parallel to the direction in which the short side 1b extends. In addition, the direction of the long side 1a is a direction parallel to the direction in which the long side 1a extends. For example, the position of the long side 1a in the direction of the short side 1b can be changed for each layer of nano-crystal alloy ribbon 1. In addition, there may be a plurality of layers having the same position of the long side 1a in the direction of the short side 1b. In this case, layers having a different position of the long side 1a in the direction of the short side 1b can be provided adjacently to the plurality of layers.

Attention is paid to the position of the short side 1b in each of the plurality of nano-crystal alloy ribbons 1 stacked in the thickness direction T. At least some of the short sides 1b are preferably different in position in the direction of the long side 1a as compared with the short sides 1b of the nano-crystal alloy ribbons 1 adjacent in the thickness direction T. In this case, it is possible to prevent the positions of all the short sides 1b of the plurality of stacked nano-crystal alloy ribbons 1 from matching when viewed from the thickness direction T, which is preferable.

For example, the position of the short side 1b in the direction of the long side 1a can be changed for each layer of nano-crystal alloy ribbon 1. In addition, there may be a plurality of layers having the same position of the short side 1b in the direction of the long side 1a. In this case, layers having a different position of the short side 1b in the direction of the long side 1a can be provided adjacently to the plurality of layers.

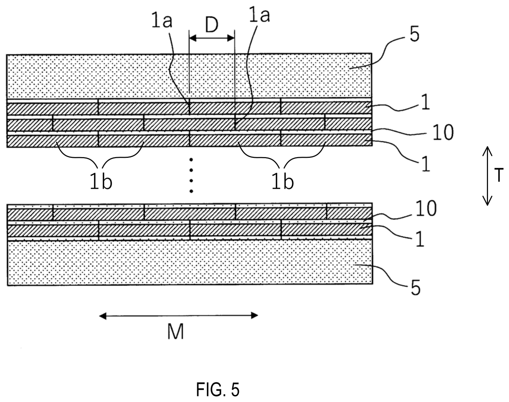

FIG. 5 is a cross-sectional view illustrating an example of a structure in which the nano-crystal alloy ribbons 1 are stacked. FIG. 5 is a cross-sectional view of the central portion M1 of the sheet-shaped magnetic member 110. The left-right direction in FIG. 5 is the direction of the short side 1b.

In FIG. 5, attention is paid to the position of the long side 1a in each of the plurality of nano-crystal alloy ribbons 1 stacked in the thickness direction T. At least some of the long sides 1a are different in position in the direction of the short side 1b (that is, the left-right direction in FIG. 5) as compared with the long sides 1a of the nano-crystal alloy ribbons 1 adjacent in the thickness direction T.

For example, the position of the long side 1a in an arbitrary nano-crystal alloy ribbon 1 is different from the position of the long side 1a in the nano-crystal alloy ribbon 1 adjacent in the thickness direction T by a distance D in the direction of the short side 1b. In the example illustrated in FIG. 5, the distance D is about half the length of the short side 1b.

The distance D is preferably 0.5 mm or more. The distance D is more preferably 1 mm or more. The distance D is more preferably 2 mm or more, and particularly preferably 3 mm or more. In a case where the distance D is 0.5 mm or more, a tendency that magnetic gaps generated between the nano-crystal alloy ribbons 1 are aligned in the thickness direction T is weakened, and magnetic properties of the sheet-shaped magnetic member 110 are improved. In a case where the distance D is 0.5 mm or more, for example, magnetic permeability increases and a quality factor Q value increases.

As the distance D is increased, the magnetic gaps generated between the nano-crystal alloy ribbons 1 are less aligned in the thickness direction T, and improvement in the magnetic properties (for example, the magnetic permeability $\mu'$ is high, and the quality factor Q value is large) becomes remarkable. Further, by increasing the distance D, productivity of the sheet-shaped magnetic member 110 is also improved.

The distance D can be increased to half of the short side 1b. Note that in a case where the plurality of nano-crystal alloy ribbons 1 having the same length of the short side 1b are arranged in the direction of the short side 1b and the distance D exceeds 0 mm, the shape of an end of the central portion M1 in the in-plane direction IP is an uneven shape as it is. For example, the shape of the end of the central portion M1 can be made flat by using a plurality of types of nano-crystal alloy ribbons 1 having different lengths of the short sides 1b from each other in combination or by cutting a projecting portion at the end of the central portion M1.

3. Sheet-shaped magnetic member 111

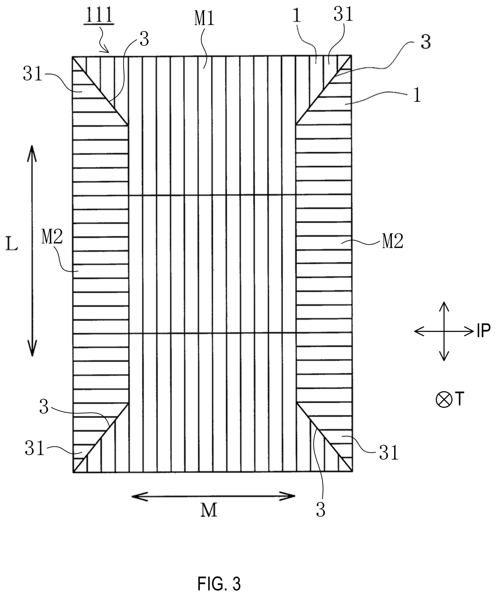

FIG. 3 is a plan view illustrating a configuration of a sheet-shaped magnetic member 111. The sheet-shaped magnetic member 111 is an embodiment different from the sheet-shaped magnetic member 110. The sheet-shaped magnetic member 111 has a configuration similar to that of the sheet-shaped magnetic member 110 except for the form of four corner portions 31. The four corner portions 31 are located at four corners of the rectangle which is the shape of the sheet-shaped magnetic member 111 in plan view. At each of the four corner portions 31, there is an inclined joint portion 3.
The inclined joint portion 3 is a portion where the plurality of nano-crystal alloy ribbons 1 in which the direction of the long side 1a is in the longitudinal direction L and the plurality of nano-crystal alloy ribbons 1 in which the direction of the long side 1a is in the transverse direction M are joined at the corner portion 31 of the sheet-shaped magnetic member 111. The inclined joint portion 3 is a portion inclined with respect to the longitudinal direction L and the transverse direction M in plan view. The inclined joint portion 3 passes through a vertex of the rectangle which is the shape of the sheet-shaped magnetic member 111.
The form of the corner portion 31 is not limited to the forms of the corner portions 31 in the sheet-shaped magnetic members 110 and 111, and can be appropriately set. For example, at the corner portion 31, the nano-crystal alloy ribbons 1 may be disposed such that the direction of the long side 1a of the nano-crystal alloy ribbon 1 is in the direction of the inclined joint portion 3 illustrated in FIG. 3.

4. Stacked substrate 300

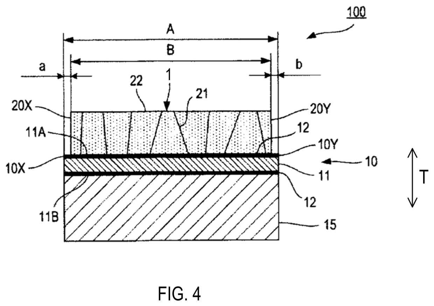

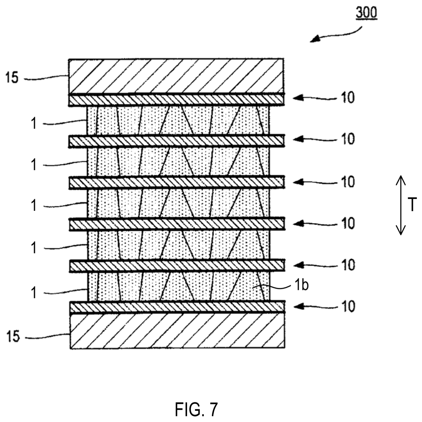

FIG. 5 is a drawing illustrating a configuration in which the plurality of nano-crystal alloy ribbons 1 are stacked one by one. As a configuration different from the configuration illustrated in FIG. 5, a plurality of stacked substrates 300 illustrated in FIG. 7 may be produced in advance, and then the plurality of stacked substrates 300 may be further stacked to form the sheet-shaped magnetic member 110, 111. The stacked substrate 300 is a member in which the plurality of nano-crystal alloy ribbons 1 are stacked in the thickness direction T.
For example, in the configuration illustrated in FIG. 5, the sheet-shaped magnetic member 110, 111 can be configured by disposing the stacked substrate 300 instead of each nano-crystal alloy ribbon 1. By producing the stacked substrates 300 in advance and further stacking the stacked substrates 300, a stacking step can be efficiently performed. In addition, in a case where the stacked substrates 300 are arranged and stacked, it is possible to reduce the number of steps for forming the sheet-shaped magnetic member 110, 111 as compared with a case where the nano-crystal alloy ribbons 1 are arranged and stacked one by one.
An example of the stacked substrate 300 is illustrated in FIG. 7. In the stacked substrate 300 illustrated in FIG. 7, the five layers of nano-crystal alloy ribbons 1 are stacked with an adhesive layer 10 interposed between every two nano-crystal alloy ribbons 1. The stacked substrate 300 can be produced using, for example, magnetic sheet materials 100 illustrated in FIG. 4. Note that the magnetic sheet material 100 will be described later. FIG. 7 illustrates a cross section parallel to the direction of the short side 1b of the nano-crystal alloy ribbon 1. The length of the stacked substrate 300 in the direction of the long side 1a (that is, in FIG. 7, a direction orthogonal to the paper surface) can be appropriately set.
Hereinafter, a method for producing the stacked substrate 300 will be described. First, the five magnetic sheet materials 100 illustrated in FIG. 4 are prepared. The magnetic sheet material 100 has a configuration in which the nano-crystal alloy ribbon 1, the adhesive layer 10, and a resin sheet 15 are stacked. The five magnetic sheet materials 100 are referred to as first to fifth layers, respectively.
The second layer is stacked on the first layer. At this time, the resin sheet 15 is peeled off from the second layer to expose the adhesive layer 10 in the second layer. The second layer is disposed on the nano-crystal alloy ribbon 1 of the first layer in a direction in which the exposed adhesive layer 10 faces the first layer.
The third layer is stacked on the second layer. At this time, the resin sheet 15 is peeled off from the third layer to expose the adhesive layer 10 in the third layer. The third layer is disposed on the nano-crystal alloy ribbon 1 of the second layer in a direction in which the exposed adhesive layer 10 faces the second layer.
The fourth layer is stacked on the third layer. At this time, the resin sheet 15 is peeled off from the fourth layer to expose the adhesive layer 10 in the fourth layer. The fourth layer is disposed on the nano-crystal alloy ribbon 1 of the third layer in a direction in which the exposed adhesive layer 10 faces the third layer.
The fifth layer is stacked on the fourth layer. At this time, the resin sheet 15 is peeled off from the fifth layer to expose the adhesive layer 10 in the fifth layer. The fifth layer is disposed on the nano-crystal alloy ribbon 1 of the fourth layer in a direction in which the exposed adhesive layer 10 faces the fourth layer. Then, the adhesive layer 10 is attached onto the fifth layer, and the resin sheet 15 is attached onto the adhesive layer 10.

Through the above steps, the stacked substrate 300 is completed. The resin sheets 15 exist on both sides of the stacked substrate 300 in the thickness direction T. These resin sheets 15 are protective sheets. By providing the resin sheets 15, handling of the stacked substrate 300 is facilitated. The resin sheet 15 is peeled off when the stacked substrate 300 is attached to another member or when another member is attached to the stacked substrate 300.

In the method for producing the stacked substrate 300, when the plurality of magnetic sheet materials 100 are stacked, for example, a following method can be used. A plurality of windings around each of which the elongated magnetic sheet material 100 is wound are prepared. While the magnetic sheet material 100 is drawn out from each winding and conveyed, the magnetic sheet materials 100 are stacked. According to this method, the elongated stacked substrate 300 can be produced.

The elongated stacked substrate 300 can be wound into a winding and stored in the state of the winding. The stacked substrate 300 can be drawn out from the winding and cut to a specific length for use. In addition, the plurality of stacked substrates 300 may be further stacked to produce the stacked substrate 300 having more layers. For example, the two stacked substrates 300 each having five stacked layers may be stacked to produce the stacked substrate 300 having ten stacked layers. The number of stacked layers in the stacked substrate 300 can be appropriately set.

In addition, the plurality of magnetic sheet materials 100 having a specific length may be prepared, arranged and stacked to produce the stacked substrate 300 having the specific length. When the stacked substrate 300 is produced, as illustrated in FIG. 5, at least some of the long sides 1a of the plurality of stacked nano-crystal alloy ribbons 1 are preferably different in position in the direction of the short side 1b by the distance D as compared with the long sides 1a of the nano-crystal alloy ribbons 1 adjacent in the thickness direction T. In this case, it is preferable to combine the magnetic sheet materials 100 having different lengths in the direction of the short side 1b so as not to cause unevenness at an end of the stacked substrate 300 in the in-plane direction IP.

It is also possible to produce the sheet-shaped magnetic member 110, 111 by preparing, arranging, and stacking the plurality of stacked substrates 300. In this case, the two stacked substrates 300 adjacent in the thickness direction T are referred to as a first stacked substrate 300 and a second stacked substrate 300.

The nano-crystal alloy ribbon 1 at the end of the first stacked substrate 300 on the second stacked substrate 300 side is referred to as a first nano-crystal alloy ribbon 1. The nano-crystal alloy ribbon 1 which is located at the end of the second stacked substrate 300 on the first stacked substrate 300 side and is adjacent to the first nano-crystal alloy ribbon 1 in the thickness direction T is referred to as a second nano-crystal alloy ribbon 1.

As in the case illustrated in FIG. 5, at least some of the long sides 1a of the first nano-crystal alloy ribbons 1 are preferably different in position in the direction of the short side 1b by the distance D as compared with the long sides 1a of the second nano-crystal alloy ribbons 1.

In this case, it is preferable to combine the stacked substrates 300 having different lengths in the direction of the short side 1b so as not to cause unevenness at an end of the sheet-shaped magnetic member 110, 111 in the in-plane direction IP.

In addition, when the sheet-shaped magnetic member 110, 111 is produced, at least some of the short sides 1b of the plurality of stacked nano-crystal alloy ribbons 1 are preferably different in position in the direction of the long side 1a by the distance D as compared with the short sides 1b of the nano-crystal alloy ribbons 1 adjacent in the thickness direction T. In this case, it is preferable to combine the stacked substrates 300 having different lengths in the direction of the long side 1a so as not to cause unevenness at an end of the sheet-shaped magnetic member 110, 111.

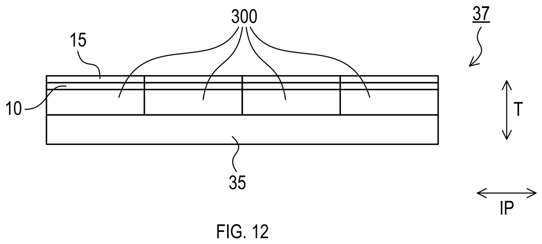

A case where the stacked substrate 300 illustrated in FIG. 7 is used instead of the nano-crystal alloy ribbons 1 illustrated in FIG. 5 when the sheet-shaped magnetic member 110, 111 is produced will be described. As illustrated in FIG. 12, a base material 35 is prepared. The base material 35 is a substrate for arranging the plurality of stacked substrates 300 side by side. The base material 35 is, for example, a wide resin sheet. In addition, the base material 35 is preferably a release film of the resin sheet. In the case of the release film, it is easy to attach the sheet-shaped magnetic member 110, 111 to another member.

In each of the plurality of stacked substrates 300, the resin sheet 15 at the lower end is peeled off to expose the adhesive layer 10. Next, each of the plurality of stacked substrates 300 is attached onto the base material 35. The plurality of stacked substrates 300 are arranged in the in-plane direction IP. Through the above steps, one unit layer 37 is completed. The unit layer 37 is a member including the base material 35 and the plurality of stacked substrates 300 arranged thereon. The plurality of unit layers 37 are produced.

Next, in the unit layer 37 of the first layer, the resin sheet 15 on the side opposite to the base material 35 is peeled off to expose the adhesive layer 10. Next, in the unit layer 37 of the second layer, the resin sheet 15 on the side opposite to the base material 35 is peeled off to expose the adhesive layer 10. Then, the unit layer 37 of the second layer is stacked on the unit layer 37 of the first layer. At this time, the exposed adhesive layer 10 in the unit layer 37 of the first layer is attached to the exposed adhesive layer 10 in the unit layer 37 of the second layer. Then, the base material 35 of the unit layer 37 of the second layer is peeled off to expose the adhesive layer 10, thereby preparing for stacking of the third layer. The above step is repeated until the number of unit layers 37 that are stacked reaches a required number. Through the above steps, the sheet-shaped magnetic member 110, 111 is completed.

The base material 35 of the unit layer 37 attached last may be left as it is or may be peeled off. In a case where the base material 35 is peeled off, the resin sheet 5 illustrated in FIG. 5 can be attached to a place where the base material 35 existed. The resin sheet 5 has a function of a base material and a function of a protective film. In a case where the resin sheet 5 is attached, handling of the sheet-shaped magnetic member 110, 111 is facilitated.

When the unit layers 37 are stacked, at least some of the long sides 1a in the plurality of stacked unit layers 37 are preferably different in position in the direction of the short side 1b by the distance D as compared with the long sides 1a of the nano-crystal alloy ribbons 1 adjacent in the thickness direction T.

In this case, it is preferable to combine the stacked substrates 300 having different lengths in the direction of the short side 1b so as not to cause unevenness at an end of the sheet-shaped magnetic member 110, 111 in the in-plane direction IP.

In addition, when the unit layers 37 are stacked, at least some of the short sides 1b of the plurality of stacked unit layers 37 are preferably different in position in the direction of the long side 1a by the distance D as compared with the short sides 1b of the nano-crystal alloy ribbons 1 adjacent in the thickness direction T.

In this case, it is preferable to combine the stacked substrates 300 having different lengths in the direction of the long side 1a so as not to cause unevenness at the end of the sheet-shaped magnetic member 110, 111 in the in-plane direction IP. When the stacked substrates 300 are stacked by the method described above, the two adhesive layers 10 are disposed between the two stacked substrates 300 adjacent in the thickness direction T.

In the stacked substrate 300 illustrated in FIG. 7, the five layers of nano-crystal alloy ribbons 1 are stacked, but the number of layers of nano-crystal alloy ribbons 1 that are stacked in the stacked substrate 300 is not limited to five. The number of layers of nano-crystal alloy ribbons 1 that are stacked in the stacked substrate 300 is preferably three or more. The upper limit of the number of stacked layers only needs to be set as necessary, but is preferably 25 or less, for example. The upper limit of the number of stacked layers is more preferably 20 or less, still more preferably 15 or less, and particularly preferably 10 or less.

5. Stacked unit

The sheet-shaped magnetic member 110, 111 includes, for example, several stacked units. For example, a plurality of stacked units can be produced, and then the plurality of produced stacked units can be combined to produce the sheet-shaped magnetic member 110, 111.

Each stacked unit can be produced, for example, by arranging the nano-crystal alloy ribbons 1 in the in-plane direction IP and stacking the nano-crystal alloy ribbons 1 in the thickness direction T. In addition, each stacked unit can be produced, for example, by arranging the stacked substrates 300 in the in-plane direction IP and stacking the stacked substrates 300 in the thickness direction T. In addition, each stacked unit can also be produced, for example, by combining the nano-crystal alloy ribbons 1 and the stacked substrates 300.

Also in the stacked unit, it is preferable to provide resin sheets at the upper end and the lower end in the thickness direction T. The resin sheet functions as a protective sheet. In a case where the resin sheets are provided, handling of the stacked unit is facilitated. The resin sheets at the upper end and the lower end are preferably release films. When the stacked unit is attached to another member or when another member is attached to the stacked unit, the resin sheet is peeled off.

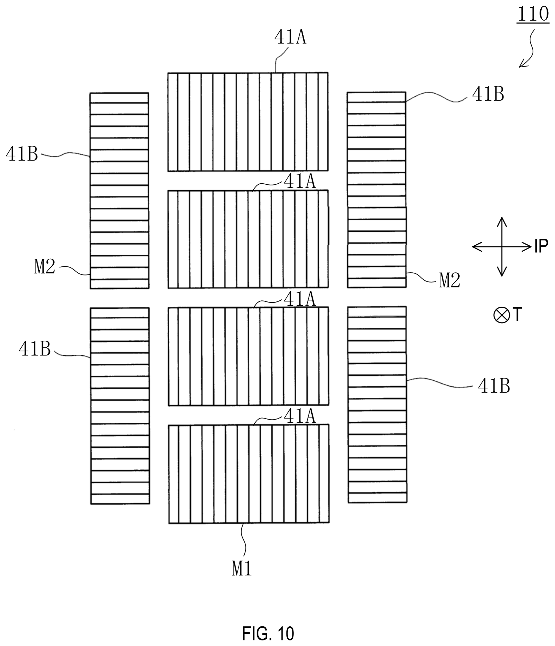

FIG. 10 illustrates the sheet-shaped magnetic member 110 including stacked units 41A and 41B. The plurality of stacked units 41A constitute the central portion M1. The plurality of stacked units 41B constitute both the outer portions M2.

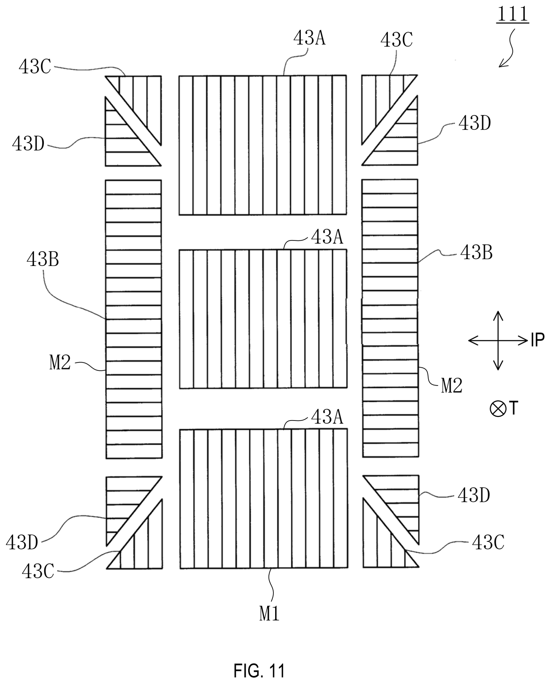

FIG. 11 illustrates the sheet-shaped magnetic member 111 including stacked units 43A , 43B, 43C, and 43D. The plurality of stacked units 43A form the central portion M1. The plurality of stacked units 43B form both the outer portions M2. The plurality of stacked units 43C and the plurality of stacked units 43D constitute the corner portions 31.

FIGS. 10 and 11 each illustrate a state of being disassembled into the stacked units. In the forms illustrated in FIGS. 10 and 11, the plurality of stacked units are divided in the in-plane direction IP. The plurality of stacked units may be divided in the thickness direction T.

The sheet-shaped magnetic member 110, 111 may be a large sheet-shaped magnetic member 110, 111. The large sheet-shaped magnetic member 110, 111 can be efficiently produced by a method of producing the stacked units first, and then combining the produced stacked units. When the stacked units are combined, the stacked units can be arranged in the in-plane direction IP or stacked in the thickness direction T. In addition, when the stacked units are stacked in the thickness direction T, the stacked units can be stacked such that the positions of the long sides 1a are shifted in the direction of the short side 1b between the stacked units, or the stacked units can be stacked such that the positions of the short sides 1b are shifted in the direction of the long side 1a between the stacked units.

6. Magnetic sheet material 100

When the nano-crystal alloy ribbons 1 are stacked, it is preferable that the adhesive layer 10 is provided between the two nano-crystal alloy ribbons 1, and the two nano-crystal alloy ribbons 1 are bonded by the adhesive layer 10.

In addition, the nano-crystal alloy ribbon 1 is preferably broken into small pieces 22. The size and shape of each of the small pieces 22 are preferably a rectangular shape having one side of about 0.1 mm to 2 mm. However, when the nano-crystal alloy ribbon 1 is cracked, it is difficult to break the nano-crystal alloy ribbon 1 into the small pieces 22 having a uniform shape. Therefore, the sizes of the small pieces 22 only need to be approximately similar, and the shape of the small piece 22 does not need to be rectangular.

The adhesive layer 10 is disposed on one surface of the nano-crystal alloy ribbon 1. One surface is one main surface. It is preferable to stack the nano-crystal alloy ribbons 1 such that the nano-crystal alloy ribbon 1 and the adhesive layer 10 are alternately arranged. The configuration in which the nano-crystal alloy ribbon 1 and the adhesive layer 10 are alternately arranged can be produced by the magnetic sheet material 100 illustrated in FIG. 4.

FIG. 4 illustrates a cross-sectional structure of the magnetic sheet material 100. The magnetic sheet material 100 includes the nano-crystal alloy ribbon 1, the adhesive layer 10, and the resin sheet 15. The adhesive layer 10 is disposed on one surface of the nano-crystal alloy ribbon 1. The adhesive layer 10 is a member formed in an elongated shape corresponding to the shape of the band-shaped nano-crystal alloy ribbon 1. The adhesive layer 10 is, for example, a film-like member formed in a rectangular shape. The adhesive layer 10 includes a support 11 and an adhesive 12.

The support 11 is a band-shaped film member formed in an elongated shape. The support 11 is, for example, a film member formed in a rectangular shape. The support 11 is formed using a flexible resin material. As the resin material, for example, polyethylene terephthalate (PET) or the like can be used.

The adhesive 12 is provided in a film shape or a layer shape on each of a first surface 11A and a second surface 11B of the support 11. Each of the first surface 11A and the second surface 11B is a main surface of the support 11. The first surface 11A is a surface facing the nano-crystal alloy ribbon 1. The second surface 11B is a surface opposite to the first surface 11A.

The adhesive 12 is, for example, a pressure-sensitive bond. The adhesive 12 is, for example, a known bond such as an acrylic adhesive, a silicone-based adhesive, a urethane-based adhesive, a synthetic rubber, or a natural rubber. The acrylic bond is preferable as the adhesive 12 because it is excellent in heat resistance and moisture resistance and can bond a wide range of materials.

The adhesive 12 is provided on the entire surfaces of the first surface 11A and the second surface 11B, for example. In the first surface 11A and the second surface 11B, an area where the adhesive 12 is provided does not need to be the entire surfaces of the first surface 11A and the second surface 11B.

For example, the adhesive 12 does not need to be provided at an end in the width direction of the first surface 11A and the second surface 11B. It is sufficient if the adhesive 12 is provided at least on portions of the first surface 11A and the second surface 11B in contact with the nano-crystal alloy ribbon 1. The adhesive layer 10 is, for example, a double-sided tape.

The resin sheet 15 is provided on a main surface of the adhesive layer 10 on the side opposite to the nano-crystal alloy ribbon 1. The resin sheet 15 is a film-like member formed using a resin. The resin sheet 15 is, for example, a protective film, a release film, or a liner. The resin sheet 15 is a member used for protecting the nano-crystal alloy ribbon 1.

By providing the resin sheet 15, handling of the nano-crystal alloy ribbon 1 is facilitated. In addition, even in a case where an unintended external force is applied to the nano-crystal alloy ribbon 1, the resin sheet 15 prevents an excessive increase in the number of cracks 21 to be described later or cracks connecting the plurality of cracks 21 in a network shape. Further, the resin sheet 15 prevents the small pieces 22 of the nano-crystal alloy ribbon 1 from falling off. Moreover, the resin sheet 15 prevents the nano-crystal alloy ribbon 1 from rusting.

An example of the method for manufacturing the magnetic sheet material 100 will be described below. The nano-crystal alloy ribbon 1 having a specific width is prepared. For example, the form of the nano-crystal alloy ribbon 1 is an elongated shape wound around a roll. The length of the nano-crystal alloy ribbon 1 in the longitudinal direction is, for example, 20000 m.

The form of the adhesive layer 10 is also an elongated shape wound around a roll. The adhesive layer 10 includes the support 11 and the adhesives 12 provided on both the surfaces of the support 11. The resin sheets 15 are preferably provided outside the adhesives 12.

While the nano-crystal alloy ribbon 1 and the adhesive layer 10 are drawn out from the rolls, the adhesive layer 10 is attached to one surface of the nano-crystal alloy ribbon 1. The resin sheet 15 is attached to the main surface of the adhesive layer 10 on the side opposite to the nano-crystal alloy ribbon 1.

Thereafter, a cracking roll is directly pressed against the nano-crystal alloy ribbon 1 to form the cracks 21 in the nano-crystal alloy ribbon 1. As a result, the nano-crystal alloy ribbon 1 is divided into the small pieces 22. Through the above steps, the magnetic sheet material 100 having the layer structure illustrated in FIG. 4 can be produced.

Since the form of the magnetic sheet material 100 is an elongated shape, the magnetic sheet material 100 can be wound around a roll. In this case, handling of the magnetic sheet material 100 is facilitated. Note that even if the nano-crystal alloy ribbon 1 is cracked and divided into the small pieces 22, since the adhesive layer 10 is provided on one surface of the nano-crystal alloy ribbon 1, it is possible to prevent the small pieces 22 from falling off. Therefore, even after the nano-crystal alloy ribbon 1 is divided into the small pieces 22, the small pieces 22 are held on the adhesive layer 10. In addition, the nano-crystal alloy ribbon 1 maintains the form of a band shape in appearance.

The resin sheet 15 can be peeled off from the magnetic sheet material 100 to expose the adhesive layer 10. Next, the nano-crystal alloy ribbon 1 can be attached to another nano-crystal alloy ribbon 1 or the nano-crystal alloy ribbon 1 can be attached to another member with the exposed adhesive layer 10 interposed therebetween. In this case, it is easy to arrange or stack the nano-crystal alloy ribbons 1. In addition, as described above, the stacked substrate 300 or the sheet-shaped magnetic member 110, 111 can be produced using the magnetic sheet material 100.

7. Nano-crystal alloy ribbon 1

The nano-crystal alloy ribbon 1 can be obtained by subjecting an amorphous alloy ribbon capable of nanocrystallization to a heat treatment for nanocrystallization. It is preferable to perform heat treatment for nanocrystallization in a state where tension is applied to the amorphous alloy ribbon capable of nanocrystallization.

The nano-crystal alloy ribbon 1 preferably has a composition represented by the following general formula.

General Formula: $(Fe_{1-a}M_a)_{100-x-y-z-\alpha-\beta-\gamma}Cu_xSi_yB_zM'_\alpha M''_\beta X_\gamma$ (atom%) In the above general formula, M is an element of Co, Ni, or both of them. M' is at least one element selected from the group consisting of Nb, Mo, Ta, Ti, Zr, Hf, V, Cr, Mn, and W. M" is at least one element selected from the group consisting of Al, a platinum group element, Sc, a rare earth element, Zn, Sn, and Re. X is at least one element selected from the group consisting of C, Ge, P, Ga, Sb, In, Be, and As. a, x, y, z, $\alpha$, $\beta$, and $\gamma$ satisfy $0 \leq a \leq 0.5$, $0.1 \leq x \leq 3$, $0 \leq y \leq 30$, $0 \leq z \leq 25$, $5 \leq y+z \leq 30$, $0 \leq \alpha \leq 20$, $0 \leq \beta \leq 20$, and $0 \leq \gamma \leq 20$, respectively.

Preferably, in the general formula, a, x, y, z, $\alpha$, $\beta$, and $\gamma$ satisfy $0 \leq a \leq 0.1$, $0.7 \leq x \leq 1.3$, $12 \leq y \leq 17$, $5 \leq z \leq 10$, $1.5 \leq \alpha \leq 5$, $0 \leq \beta \leq 1$, and $0 \leq \gamma \leq 1$, respectively.

In the present embodiment, the nano-crystal alloy ribbon 1 is, for example, a ribbon (FT-3 manufactured by Proterial, Ltd. (former Hitachi Metals, Ltd.)) made of a Fe-Cu-Nb-Si-B-based nano-crystal alloy. Note that the nano-crystal alloy ribbon 1 may have a composition different from the composition represented by the above general formula.

The nano-crystal alloy ribbon 1 is, for example, mechanically more brittle than an amorphous alloy ribbon. When an external force is directly applied to the nano-crystal alloy ribbon 1 to form the cracks 21, the external force may be small. In the nano-crystal alloy ribbon 1, the cracks 21 can be formed without substantially forming unevenness on the surface. Therefore, even after the cracks 21 are formed, the planar state of the nano-crystal alloy ribbon 1 can be brought into a favorable state. In addition, the temporal change of the shape of the nano-crystal alloy ribbon 1 generated after bonding the nano-crystal alloy ribbon 1 and the adhesive layer 10 is small. In addition, it is possible to suppress a temporal change in magnetic properties in the sheet-shaped magnetic member 110, 111.

The nano-crystal alloy ribbon 1 is manufactured, for example, by roll quenching. The thickness of the nano-crystal alloy ribbon 1 is, for example, 30 $\mu$m or less. The thickness of the nano-crystal alloy ribbon 1 is preferably 25 $\mu$m or less, and more preferably 20 $\mu$m or less.

When the nano-crystal alloy ribbon 1 is moderately thick, handling of the nano-crystal alloy ribbon 1 is facilitated. The thickness of the nano-crystal alloy ribbon 1 is preferably 5 $\mu$m or more, and more preferably 10 $\mu$m or more.

The nano-crystal alloy ribbons 1 are preferably stacked with the adhesive layer 10 interposed therebetween. The adhesive layer 10 is preferably the adhesive layer 10 of the magnetic sheet material 100. In the nano-crystal alloy ribbons 1 stacked with the adhesive layer 10 interposed therebetween, the following formula is preferably established.

$$0.2 \text{ mm} \leq (\text{width A} - \text{width B}) \leq 3 \text{ mm}$$

As illustrated in FIG. 4, the width A is a dimension related to the adhesive layer 10. The width A is, for example, the width of the adhesive layer 10 in the direction intersecting the direction of the long side 1a. The width A is, for example, the width of the region where the adhesive 12 is provided in the direction intersecting the direction of the long side 1a. The direction intersecting the direction of the long side 1a is parallel to the in-plane direction IP. The direction intersecting the direction of the long side 1a is preferably the direction of the short side 1b. Note that in a case where the adhesive 12 is provided on the entire surface of the support 11, the width of the adhesive layer 10 in the direction intersecting the direction of the long side 1a is equal to the width of the region where the adhesive 12 is provided in the direction intersecting the direction of the long side 1a.

As illustrated in FIG. 4, the width B is the width of the nano-crystal alloy ribbon 1 in the direction intersecting the direction of the long side 1a. The direction intersecting the direction of the long side 1a is preferably the direction of the short side 1b. Here, the lower limit of (width A-width B) is preferably 0.5 mm, and more preferably 1.0 mm. In addition, the upper limit of (width A-width B) is preferably 2.5 mm, and more preferably 2.0 mm.

It is preferable that the nano-crystal alloy ribbon 1 and the adhesive layer 10 satisfy the relationship of the following formula.

$$0 \text{ mm} < \text{gap a and } 0 \text{ mm} < \text{gap b}$$

As illustrated in FIG. 4, each of the gap a and the gap b is a distance from an end of the adhesive layer 10 to an end of the nano-crystal alloy ribbon 1. Each of the gap a and the gap b is a distance in the direction intersecting the direction of the long side 1a. The direction intersecting the direction of the long side 1a is parallel to the in-plane direction IP. The direction intersecting the direction of the long side 1a is preferably the direction of the short side 1b. Note that the longitudinal direction of the magnetic sheet material 100 is the same as the direction of the long side 1a.

The gap a is a distance from a first adhesive layer end 10X of the adhesive layer 10 to a first ribbon end 20X of the nano-crystal alloy ribbon 1. The gap b is a distance from a second adhesive layer end 10Y of the adhesive layer 10 to a second ribbon end 20Y of the nano-crystal alloy ribbon 1.

The first ribbon end 20X is an end on the same side as the first adhesive layer end 10X. The second adhesive layer end 10Y is an end opposite to the first adhesive layer end 10X. The second ribbon end 20Y is an end on the same side as the second adhesive layer end 10Y.

8. Anisotropy of nano-crystal alloy ribbon 1

The nano-crystal alloy ribbon 1 is obtained, for example, by manufacturing an amorphous alloy ribbon and then performing heat treatment to generate nano-crystals. The nano-crystal alloy ribbon 1 has, for example, anisotropy of magnetic properties due to the manufacturing method.

By dividing the nano-crystal alloy ribbon 1 into the small pieces 22 and reducing the sizes of the divided small pieces 22, the direct-current relative magnetic permeability $\mu$r of the nano-crystal alloy ribbon 1 can be reduced. In addition, by performing a heat treatment of the amorphous alloy ribbon in a magnetic field or applying tension during the heat treatment of the amorphous alloy ribbon, anisotropy is imparted to the nano-crystal alloy ribbon 1, and only the direct-current relative magnetic permeability $\mu$r in a specific direction can be reduced.

For example, while an elongated amorphous alloy ribbon is continuously conveyed, the amorphous alloy ribbon is brought into contact with a heating body and subjected to a heat treatment, whereby the nano-crystal alloy ribbon 1 can be manufactured. In this case, the magnetic properties of the nano-crystal alloy ribbon 1 may be different between the longitudinal direction of the nano-crystal alloy ribbon 1 and the width direction orthogonal to the longitudinal direction. In the band-shaped nano-crystal alloy ribbon 1 illustrated in FIG. 2, the direction of the long side 1a is the longitudinal direction of the nano-crystal alloy ribbon 1, and the direction of the short side 1b is the width direction of the nano-crystal alloy ribbon 1.

In the nano-crystal alloy ribbon 1, it is assumed that the magnetic properties in the direction of the long side 1a are different from the magnetic properties in the direction of the short side 1b. The direction of the long side 1a is the same as the casting direction. The casting direction is a direction in which casting of the amorphous alloy ribbon progresses. In a case where a molten metal is discharged to a cooling roll to cast the amorphous alloy ribbon, the casting direction is a direction along the rotation direction of the cooling roll.

FIG. 2 illustrates an anisotropic direction AI of the nano-crystal alloy ribbon 1. In this example, the direction of the long side 1a coincides with the anisotropic direction AI. Note that the direction of the long side 1a also coincides with the casting direction. The anisotropic direction AI is determined as follows. In the nano-crystal alloy ribbon 1, the direct-current relative magnetic permeability $\mu$r in the direction of the long side 1a and the direct-current relative magnetic permeability $\mu$r in the direction of the short side 1b are measured. Of the direction of the long side 1a and the direction of the short side 1b, the direction having a lower value of the direct-current relative magnetic permeability $\mu$r is defined as the anisotropic direction AI.

Note that the anisotropic direction AI of the nano-crystal alloy ribbon 1 can also be the direction of the short side 1b of the nano-crystal alloy ribbon 1. In the present embodiment, a case where the anisotropic direction AI of the nano-crystal alloy ribbon 1 is the direction of the long side 1a of the nano-crystal alloy ribbon 1 will be described. In addition, although it is possible to obtain the nano-crystal alloy ribbon 1 having substantially no anisotropy, it is preferable that the nano-crystal alloy ribbon 1 has the anisotropic direction AI.

Here, the direct-current relative magnetic permeability $\mu$r of the nano-crystal alloy ribbon 1 in the direction of the long side 1a is defined as $P_L$. In addition, the direct-current relative magnetic permeability $\mu$r of the nano-crystal alloy ribbon 1 in the direction of the short side 1b is defined as $P_M$. The larger value of $P_L$ and $P_M$ is defined as $P_{max}$. The smaller value of $P_L$ and $P_M$ is defined as $P_{min}$. PD expressed by the following formula (1) is preferably 3% or more, and more preferably 10% or more. The unit of PD is %.

$$\text{Formula (1)} \quad PD = ((P_{max} - P_{min})/P_{max}) \times 100$$

9. Anisotropic direction AI and normal of coil 6

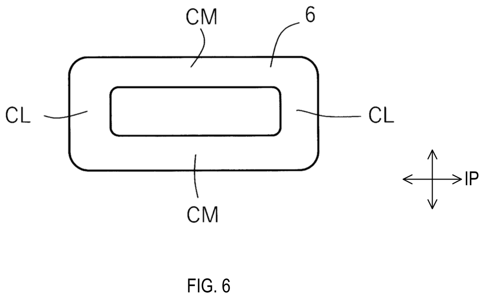

When the sheet-shaped magnetic member 110, 111 is used as a member for a non-contact charging circuit, a coil 6 for the non-contact charging circuit is disposed close to the sheet-shaped magnetic member 110, 111. The coil 6 is, for example, a rectangular coil as illustrated in FIG. 6. The coil 6 faces and is close to the sheet-shaped magnetic member 110, 111. The coil 6 includes portions CL extending in the longitudinal direction L and portions CM extending in the transverse direction M. The portions CL face both the outer portions M2 of the sheet-shaped magnetic member 110, 111. The portions CM face the central portion M1 of the sheet-shaped magnetic member 110, 111.

In the nano-crystal alloy ribbon 1, the direct-current magnetic permeability in the direction of the long side 1a is smaller than the direct-current magnetic permeability in the direction of the short side 1b, and the direction of the long side 1a is the anisotropic direction AI. Therefore, the nano-crystal alloy ribbon 1 exhibits a high quality factor Q value when a magnetic flux flows in the direction of the long side 1a.

When a current flows through the coil 6, a magnetic flux is generated in the nano-crystal alloy ribbon 1 disposed close to the coil 6. The direction of the magnetic flux is a normal direction with respect to the direction in which the current of the coil 6 flows. The portion CL extends in the longitudinal direction L. Both the outer portions M2 face the portions CL. Therefore, the direction of the magnetic flux generated in both the outer portions M2 is the transverse direction M. Note that the transverse direction M is the normal direction of the coil 6.

In the nano-crystal alloy ribbons 1 included in both the outer portions M2, the anisotropic direction AI is the transverse direction M. Therefore, in both the outer portions M2, the direction in which the magnetic flux flows coincides with the anisotropic direction AI. The portions CM extend in the transverse direction M. The central portion M1 faces the portions CM. Therefore, the direction of the magnetic flux generated in the central portion M1 is the longitudinal direction L. In the nano-crystal alloy ribbons 1 included in the central portion M1, the anisotropic direction AI is the longitudinal direction L. Therefore, in the central portion M1, the direction in which the magnetic flux flows coincides with the anisotropic direction AI.

With the above configuration, the sheet-shaped magnetic member 110, 111 exhibits a high quality factor Q value. In a case where an angle θ formed by the direction in which the magnetic flux flows and the direction of the long side 1a (that is, the anisotropic direction AI) is within 45° in the vicinity of the coil 6 in which the magnetic flux concentrates and flows, the sheet-shaped magnetic member 110, 111 exhibits a high quality factor Q value.

The direction in which the magnetic flux flows is the normal direction of the coil 6. The normal direction of the coil 6 is a direction on the surface of the nano-crystal alloy ribbon 1, and is a direction normal to the direction in which the current of the coil 6 that faces the nano-crystal alloy ribbon 1 flows.

In a case where both the outer portions M2 are arranged at positions facing the portions CL and the vicinity thereof and the central portion M1 is arranged at the position facing the portions CM and the vicinity thereof, the angle θ can be set to 45° or less.

In the sheet-shaped magnetic member 110 illustrated in FIG. 1, portions where the angle θ exceeds 45° are generated at the four corner portions 31. However, the effect that the sheet-shaped magnetic member 110, 111 exhibits a high quality factor Q value depends on the area of the portion where the angle θ is within 45° in the sheet-shaped magnetic member 110, 111, and thus the sheet-shaped magnetic member 110, 111 exhibits a high quality factor Q value if the angle θ is within 45° in a portion having an area equal to or larger than a certain area in the sheet-shaped magnetic member 110, 111.

Therefore, the sheet-shaped magnetic member 110 illustrated in FIG. 1 exhibits a high quality factor Q value with a simpler arrangement than that of the sheet-shaped magnetic member 111 illustrated in FIG. 3. The number of production steps of the sheet-shaped magnetic member 110 is small, and the price of the sheet-shaped magnetic member 110 can be reduced.

In addition, as in the sheet-shaped magnetic member 111 illustrated in FIG. 3, in a case where the plurality of nano-crystal alloy ribbons 1 in which the direction of the long side 1a is the longitudinal direction L and the plurality of nano-crystal alloy ribbons 1 in which the direction of the long side 1a is the transverse direction M are joined in the inclined joint portions 3 provided at the four corner portions 31, the area of the portion where the angle θ is within 45° can be further increased in the sheet-shaped magnetic member 111. Therefore, the sheet-shaped magnetic member 111 exhibits a higher quality factor Q value.

It is preferable that the angle θ is within 45° in the region of 70% or more of the portion of the sheet-shaped magnetic member 110, 111 facing the coil 6. The portion of the sheet-shaped magnetic member 110, 111 facing the coil 6 is a portion obtained by combining a first portion overlapping the coil 6 and second portions, which each have a width of 10 mm and which are located on both sides of the first portion in the sheet-shaped magnetic member 110, 111, when the coil 6 and the sheet-shaped magnetic member 110, 111 are viewed from the thickness direction T.

In the in-plane direction IP, a portion away from the portion facing the coil 6 and inside the coil 6 has a small amount of magnetic flux. Therefore, in this portion, the angle $\theta$ does not necessarily have to be within 45°.

In a device that charges a mobile body that is traveling, a power distribution coil is disposed on the ground or in the ground. The portions CM of the power distribution coil move relative to a power reception coil and continuously pass by the power reception coil. Therefore, the direction of the long side 1a is the same as a normal of the power distribution coil. Therefore, in the central portion M1, the nano-crystal alloy ribbon 1 is preferably disposed such that the direction of the long side 1a is the longitudinal direction L.

The sheet-shaped magnetic member 110, 111 does not need to be provided in a portion facing the space inside the coil 6. For example, the sheet-shaped magnetic member 110, 111 may have an opening in a portion facing the space inside the coil 6. In this case, the manufacturing cost of the sheet-shaped magnetic member 110, 111 can be reduced.

10. Example

The stacked substrate 300 was produced using the Fe-Cu-Nb-Si-B-based nano-crystal alloy ribbons 1 (FT-3 manufactured by Proterial, Ltd. (former Hitachi Metals Ltd.)) each having a width of 30 mm and a thickness of 20 $\mu$m. The stacked substrate 300 was provided with the five layers of nano-crystal alloy ribbons 1. FIG. 7 illustrates a cross-sectional structure of the stacked substrate 300.

The stacked substrate 300 can be produced using, for example, the magnetic sheet material 100 illustrated in FIG. 4. For example, the five magnetic sheet materials 100 wound around rolls are prepared. The magnetic sheet material 100 is drawn out from each of the five rolls. The magnetic sheet materials 100 drawn out from the five rolls are referred to as first to fifth layers, respectively.

The second layer is stacked on the first layer. At this time, the resin sheet 15 is peeled off from the second layer to expose the adhesive layer 10 in the second layer. The second layer is disposed on the nano-crystal alloy ribbon 1 of the first layer in a direction in which the exposed adhesive layer 10 faces the first layer. This process is repeated to sequentially stack the first to fifth layers. Through the above steps, the stacked substrate 300 is obtained.

The stacked substrate 300 illustrated in FIG. 7 includes the resin sheets 15 on both the end surfaces in the thickness direction T. The resin sheet 15 on one end surface in the thickness direction T is the resin sheet 15 included in the magnetic sheet material 100. The resin sheet 15 on the other end surface in the thickness direction T is the resin sheet 15 that is different from the resin sheet 15 included in the magnetic sheet material 100 and is attached to the other end surface with the adhesive layer 10 interposed therebetween.

Next, the stacked substrate 300 is cut to a desired length. For example, a large number of the stacked substrates 300 each of which has a length of 250 mm are produced. Next, as illustrated in FIG. 12, the cut stacked substrates 300 are arranged on the base material 35. The base material 35 is, for example, a wide resin sheet. When the stacked substrates 300 are arranged on the base material 35, the long sides 1a of the adjacent stacked substrates 300 are made adjacent to each other. In addition, the stacked substrates 300 are arranged in the direction of the short side 1b. When the stacked substrate 300 is arranged on the base material 35, the resin sheet 15 at the lower end of the stacked substrate 300 is peeled off to expose the adhesive layer 10, and the exposed adhesive layer 10 is attached to the base material 35. If necessary, the stacked substrates 300 may also be arranged in the direction of the long side 1a.

The number of stacked substrates 300 arranged in the direction of the short side 1b and the number of stacked substrates 300 arranged in the direction of the long side 1a can be determined according to the configuration of the sheet-shaped magnetic member 110, 111 to be produced. Through the above steps, the one unit layer 37 is obtained. The plurality of unit layers 37 are produced.

Next, the resin sheet 15 at the upper end of the unit layer 37 of the first layer is peeled off to expose the adhesive layer 10. In addition, the resin sheet 15 at the upper end of the unit layer 37 of the second layer is peeled off to expose the adhesive layer 10. Next, the exposed adhesive layer 10 of the unit layer 37 of the second layer is attached to the exposed adhesive layer 10 of the unit layer 37 of the first layer. At this time, the position of the unit layer 37 of the second layer is adjusted such that the distance D illustrated in FIG. 5 is 15 mm between the nano-crystal alloy ribbon 1 in the unit layer 37 of the first layer and the nano-crystal alloy ribbon 1 in the unit layer 37 of the second layer. Further, when the unit layer 37 of the third layer is stacked, the base material 35 of the second layer is peeled off to expose the adhesive layer 10, and the exposed adhesive layer 10 of the unit layer 37 of the third layer is attached thereon.

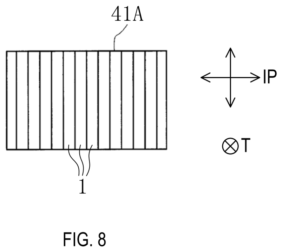

The similar steps were repeated to produce the stacked unit 41A illustrated in FIG. 8. In the stacked unit 41A, the twenty unit layers 37 are stacked in the thickness direction T. In the stacked unit 41A, the one hundred nano-crystal alloy ribbons 1 are stacked in the thickness direction T. The width of the stacked unit 41A in the transverse direction M is 400 mm. The length of the stacked unit 41A in the longitudinal direction L is 250 mm.

Note that the width of the stacked unit 41A can be adjusted by adjusting the width of the unit layer 37. In addition, the width of the stacked unit 41A can be adjusted by stacking the unit layers 37 and then cutting the unit layers 37.

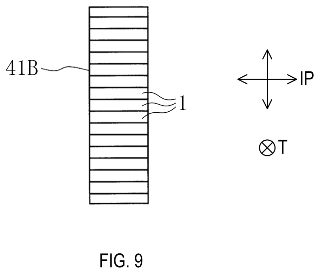

The stacked unit 41B illustrated in FIG. 9 was produced by a method basically similar to the method for producing the stacked unit 41A. In the case of producing the stacked unit 41B, the length of the stacked substrate 300 was set to 150 mm.

The four stacked units 41A and the four stacked units 41B were produced. These were arranged as illustrated in FIG. 10 to produce the sheet-shaped magnetic member 110 illustrated in FIG. 1. The width of the sheet-shaped magnetic member 110 in the transverse direction M is 700 mm. The length of the sheet-shaped magnetic member 110 in the longitudinal direction L is 1000 mm.

In the configuration illustrated in FIG. 10, each of the stacked units 41A and 41B is an integral member in the thickness direction T. Therefore, the gap between the stacked units 41A and 41B may be continuous from the upper end to the lower end of the sheet-shaped magnetic member 110 in the thickness direction T.

For example, by dividing the stacked units in the thickness direction T and adjusting the widths and lengths of the stacked units, the plurality of stacked units can be stacked. In this case, the gap between the stacked units is less likely to continue from the upper end to the lower end of the sheet-shaped magnetic member 110 in the thickness direction T.

When the stacked unit 41A, 41B is produced, the unit layers 37 are shifted in the direction of the short side 1b such that the distance D exceeds 0 mm. Therefore, if the widths of the unit layers 37 are all the same, the shape of an end of the stacked unit 41A, 41B in the in-plane direction IP becomes uneven as it is. For example, by making the width of the unit layer 37 longer than the necessary width and cutting the end of the stacked unit 41A, 41B after stacking the unit layers 37, the shape of the end can be made flat.

A protective resin sheet is preferably attached to each of the upper and lower surfaces of the sheet-shaped magnetic member 110, 111 in the thickness direction T.

Note that the width and length of the sheet-shaped magnetic member 110, 111, and the number of layers of nano-crystal alloy ribbons 1 that are stacked can be appropriately set. In addition, the ratio of the length between the central portion M1 and each of both the outer portions M2 can be appropriately set according to the structure of the coil 6 arranged to face the central portion M1 and both the outer portions M2. For example, in the case of the rectangular coil 6 illustrated in FIG. 6, both the outer portions M2 can be formed so as to face the portions CL, and the central portion M1 can be formed so as to face the portions CM.

11. Other embodiments

Although embodiments of the present disclosure have been described above, the present disclosure is not limited to the above-described embodiments, and various modifications can be made.

(1) The function of one component in each of the above embodiments may be shared by a plurality of components, or the functions of a plurality of components may be exerted by one component. Part of the configuration of each of the above embodiments may be omitted. In addition, at least part of the configuration of each of the above embodiments may be added to or replaced with the configuration of another of the above embodiments.

(2) In addition to the sheet-shaped magnetic member described above, the present disclosure can also be realized in various forms such as a system using the sheet-shaped magnetic member as a component and a method for manufacturing the sheet-shaped magnetic member.

[Technical Idea Disclosed in Present Specification]

[Item 1]

A sheet-shaped magnetic member including

a plurality of nano-crystal alloy ribbons each of which is formed in a band shape having a short side and a long side, the plurality of nano-crystal alloy ribbons being arranged in an in-plane direction and stacked in a thickness direction, in which

the sheet-shaped magnetic member has a rectangular shape having a longitudinal direction and a transverse direction when viewed from the thickness direction,

in a central portion of the sheet-shaped magnetic member in the transverse direction, a direction of the long side is the longitudinal direction, and

in both outer portions of the sheet-shaped magnetic member located on both outer sides with respect to the central portion in the transverse direction, the direction of the long side is the transverse direction.

[Item 2]

The sheet-shaped magnetic member according to item 1, in which

one of the plurality of nano-crystal alloy ribbons in which the direction of the long side is the longitudinal direction and one of the plurality of nano-crystal alloy ribbons in which the direction of the long side is the transverse direction are joined at an inclined joint portion provided at a corner portion of the sheet-shaped magnetic member, and the inclined joint portion is inclined with respect to the longitudinal direction and the transverse direction.

[Item 3]

The sheet-shaped magnetic member according to item 1 or 2, in which in each of the plurality of nano-crystal alloy ribbons, a value of a direct-current relative magnetic permeability $\mu r$ in the direction of the long side is lower than a value of a direct-current relative magnetic permeability $\mu r$ in a direction of the short side.

[Item 4]

The sheet-shaped magnetic member according to any one of items 1 to 3, in which

the plurality of nano-crystal alloy ribbons are stacked with an adhesive layer interposed between the plurality of nano-crystal alloy ribbons, and the adhesive layer includes a support that is formed in a band shape and an adhesive that is provided on each of a first surface and a second surface of the support.

[Item 5]

The sheet-shaped magnetic member according to item 4, in which a width A of the adhesive layer in a direction intersecting the direction of the long side and a width B of each of the plurality of nano-crystal alloy ribbons in the direction of the short side satisfy a relationship of 0.2 mm$\leq$(width A-width B)$\leq$3 mm.

[Item 6]

The sheet-shaped magnetic member according to any one of items 1 to 5, in which at least some of a plurality of the long sides of the plurality of nano-crystal alloy ribbons that are stacked are different in position in a direction of the short side as compared with others of the plurality of long sides of the plurality of nano-crystal alloy ribbons adjacent in the thickness direction.

[Item 7]

The sheet-shaped magnetic member according to item 6, in which a position of the long side of one of two of the plurality of nano-crystal alloy ribbons adjacent to each other in the thickness direction and a position of the long side of another of the two of the plurality of nano-crystal alloy ribbons are separated by 0.5 mm or more in the direction of the short side.

[Item 8]

The sheet-shaped magnetic member according to any one of items 1 to 7, in which

the sheet-shaped magnetic member is a sheet-shaped magnetic member for non-contact charging during traveling of a mobile body, the sheet-shaped magnetic member is mounted on the mobile body, and the longitudinal direction is a moving direction of the mobile body.

[Item 9]

The sheet-shaped magnetic member according to any one of items 1 to 8, in which

the sheet-shaped magnetic member is a sheet-shaped magnetic member for non-contact charging,

a coil for non-contact charging is disposed to face the sheet-shaped magnetic member, and
an angle formed by the direction of the long side and a normal of the coil is within 45° in a region of 70% or more of a portion of the sheet-shaped magnetic member, the portion facing the coil.

**Claims**

1. A sheet-shaped magnetic member comprising:

    a plurality of nano-crystal alloy ribbons each of which is formed in a band shape having a short side and a long side, the plurality of nano-crystal alloy ribbons being arranged in an in-plane direction and stacked in a thickness direction, wherein
    the sheet-shaped magnetic member has a rectangular shape having a longitudinal direction and a transverse direction when viewed from the thickness direction,
    in a central portion of the sheet-shaped magnetic member in the transverse direction, a direction of the long side is the longitudinal direction, and
    in both outer portions of the sheet-shaped magnetic member located on both outer sides with respect to the central portion in the transverse direction, the direction of the long side is the transverse direction.

2. The sheet-shaped magnetic member according to claim 1, wherein

    one of the plurality of nano-crystal alloy ribbons in which the direction of the long side is the longitudinal direction and one of the plurality of nano-crystal alloy ribbons in which the direction of the long side is the transverse direction are joined at an inclined joint portion provided at a corner portion of the sheet-shaped magnetic member, and
    the inclined joint portion is inclined with respect to the longitudinal direction and the transverse direction.

3. The sheet-shaped magnetic member according to claim 1 or 2, wherein in each of the plurality of nano-crystal alloy ribbons, a value of a direct-current relative magnetic permeability $\mu$r in the direction of the long side is lower than a value of a direct-current relative magnetic permeability $\mu$r in a direction of the short side.

4. The sheet-shaped magnetic member according to claim 1 or 2, wherein

    the plurality of nano-crystal alloy ribbons are stacked with an adhesive layer interposed between the plurality of nano-crystal alloy ribbons, and
    the adhesive layer includes a support that is formed in a band shape and an adhesive that is provided on each of a first surface and a second surface of the support.

5. The sheet-shaped magnetic member according to claim 4, wherein a width A of the adhesive layer in a direction intersecting the direction of the long side and a width B of each of the plurality of nano-crystal alloy ribbons in a direction of the short side satisfy a relationship of 0.2 mm≤(width A-width B)≤3 mm.

6. The sheet-shaped magnetic member according to claim 1 or 2, wherein at least some of a plurality of the long sides of the plurality of nano-crystal alloy ribbons that are stacked are different in position in a direction of the short side as compared with others of the plurality of long sides of the plurality of nano-crystal alloy ribbons adjacent in the thickness direction.

7. The sheet-shaped magnetic member according to claim 6, wherein a position of the long side of one of two of the plurality of nano-crystal alloy ribbons adjacent to each other in the thickness direction and a position of the long side of another of the two of the plurality of nano-crystal alloy ribbons are separated by 0.5 mm or more in the direction of the short side.

8. The sheet-shaped magnetic member according to claim 1 or 2, wherein

    the sheet-shaped magnetic member is a sheet-shaped magnetic member for non-contact charging during traveling of a mobile body,
    the sheet-shaped magnetic member is mounted on the mobile body, and
    the longitudinal direction is a moving direction of the mobile body.

9. The sheet-shaped magnetic member according to claim 1 or 2, wherein

the sheet-shaped magnetic member is a sheet-shaped magnetic member for non-contact charging,
a coil for non-contact charging is disposed to face the sheet-shaped magnetic member, and
an angle formed by the direction of the long side and a normal of the coil is within 45° in a region of 70% or more of a portion of the sheet-shaped magnetic member, the portion facing the coil.

FIG. 1

FIG. 2

FIG. 3

**EP 4 718 482 A1**

FIG. 4

21

FIG. 5

FIG. 6

FIG. 7

41A

1

IP

⊗T

FIG. 8

41B

1

IP

⊗T

FIG. 9

110

41A

41B

41B

M2

41A

IP

M2

41A

41B

41B

41B

⊗T

41A

M1

FIG. 10

FIG. 11

FIG. 12

## INTERNATIONAL SEARCH REPORT

| International application No. |
|---|
| **PCT/JP2024/011055** |

| A. CLASSIFICATION OF SUBJECT MATTER |
|---|
| ***H01F 27/25***(2006.01)i; ***H01F 1/16***(2006.01)i; ***H01F 1/153***(2006.01)i; ***H01F 27/36***(2006.01)i; ***H01F 38/14***(2006.01)i<br>FI:   H01F27/25; H01F1/16; H01F1/153 133; H01F38/14; H01F27/36 150 |
| According to International Patent Classification (IPC) or to both national classification and IPC |

| B. FIELDS SEARCHED |
|---|
| Minimum documentation searched (classification system followed by classification symbols)<br>   B60L53/12; H01F1/12, H01F3/00; H01F10/00; H01F27/245; H01F27/25; H01F27/36; H01F38/14: H02J50/10; H05K9/00 |
| Documentation searched other than minimum documentation to the extent that such documents are included in the fields searched<br>   Published examined utility model applications of Japan 1922-1996<br>   Published unexamined utility model applications of Japan 1971-2024<br>   Registered utility model specifications of Japan 1996-2024<br>   Published registered utility model applications of Japan 1994-2024 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | WO 2012/147341 A1 (KABUSHIKI KAISHA TOSHIBA) 01 November 2012 (2012-11-01)<br>entire text, all drawings | 1-9 |
| A | US 2018/0286575 A1 (SAMSUNG ELECTRO-MECHANICS CO., LTD.) 04 October 2018 (2018-10-04)<br>entire text, all drawings | 1-9 |
| A | US 2016/0057900 A1 (VACUUMSCHMELZE GMBH & CO. KG) 25 February 2016 (2016-02-25)<br>entire text, all drawings | 1-9 |

☐ Further documents are listed in the continuation of Box C.       ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011055**

| Patent document cited in search report | | | Publication date (day/month/year) | Patent family member(s) | | | Publication date (day/month/year) |
|---|---|---|---|---|---|---|---|
| WO | 2012/147341 | A1 | 01 November 2012 | US | 2014/0049212 | A1 | |
| | | | | entire text, all drawings | | | |
| | | | | US | 2019/0027285 | A1 | |
| | | | | CN | 103493158 | A | |
| | | | | KR | 10-2014-0003636 | A | |
| US | 2018/0286575 | A1 | 04 October 2018 | KR | 10-2018-0112354 | A | |
| | | | | entire text, all drawings | | | |
| | | | | CN | 108695986 | A | |
| | | | | CN | 208190354 | U | |
| US | 2016/0057900 | A1 | 25 February 2016 | US | 2019/0133005 | A1 | |
| | | | | entire text, all drawings | | | |
| | | | | WO | 2014/162176 | A1 | |
| | | | | DE | 102013103268 | A1 | |

Form PCT/ISA/210 (patent family annex) (July 2022)

**REFERENCES CITED IN THE DESCRIPTION**

**Patent documents cited in the description**

- JP 2023084394 A
- JP 2008112830 A

- JP 2019522355 W